# EUROPÄISCHE PATENTSCHRIFT

(11) **EP 0 659 252 B1**
(45) Veröffentlichungstag und Bekanntmachung des Hinweises auf die Patenterteilung: **10.12.1997**
(21) Anmeldenummer: 93919307.4
(22) Anmeldetag: 09.09.1993
(51) Int. Cl.: F16K 31/06, B60T 8/36, F15B 13/044

(54) **VENTILANORDNUNG, INSBESONDERE ELEKTROMAGNETVENTILANORDNUNG FÜR SCHLUPFGEREGELTE KRAFTFAHRZEUGBREMSANLAGEN**
VALVE ARRANGEMENT, IN PARTICULAR ELECTROMAGNETIC VALVE ARRANGEMENT FOR SLIP CONTROLLED MOTOR VEHICLE BRAKE SYSTEMS
SYSTEME DE SOUPAPE, NOTAMMENT SYSTEME DE SOUPAPE ELECTROMAGNETIQUE POUR DES SYSTEMES DE FREINS A REGULATION ANTIPATINAGE DE VEHICULES AUTOMOBILES

(30) Priorität: 11.09.1992 DE 4230393; 30.03.1993 DE 4310265
(43) Veröffentlichungstag der Anmeldung: 28.06.1995
(60) Teilanmeldung: 95105110.1
(73) Patentinhaber: ITT Automotive Europe GmbH, 60488 Frankfurt am Main (DE)
(72) Erfinder: ZUTT, Ulrich, D-6272 Niedernhausen (DE); WEISBROD, Helmut, D-61231 Bad-Nauheim (DE); WOLLSIFFER, Kurt, D-67699 Heiligenmoschel (DE); ZAVISKA, Dalibor, D-65760 Eschborn (DE); VOLZ, Peter, D-64291 Darmstadt (DE)
(86) Internationale Anmeldenummer: EP9302437
(87) Internationale Veröffentlichungsnummer: WO9407067

(56) Entgegenhaltungen:
- DE-A- 3 233 268
- DE-C- 4 013 425
- US-A- 4 640 558
- US-A- 4 860 794
- US-A- 5 137 339
- DE-A- 3 233 268
- DE-C- 4 013 425
- US-A- 4 640 558
- US-A- 4 860 794
- US-A- 5 137 339

## Beschreibung

Die Erfindung betrifft eine Ventilanordnung, insbesondere Elektromagnetventilanordnung für schlupfgeregelte Kraftfahrzeugbremsanlagen nach dem Oberbegriff des Anspruchs 1.

Aus der DE-A-41 35 232 ist bereits eine Ventilanordnung bekannt geworden, die mittels einer Parallelschaltung eines Kugelrückschlagventils zu einem weiteren elektromagnetisch ansteuerbaren Ventilschließglied eine direkte Druckmittelverbindung zwischen einem am Druckmittelverbraucher angeschlossenen Druckmittelkanal und einem weiteren, an der Druckmittelquelle angeschlossenen Druckmittelkanal herstellt, sobald der hydraulische Öffnungsdruck des Rückschlagventils den Schließdruck überschreitet. Beide Ventilschließglieder sind räumlich voneinander getrennt, so daß hinsichtlich der Konstruktion und der Montage Nachteile entstehen.

Aus der DE-A-32 33 268 ist ein Hydraulikventil der gattungsbildenden Art hervorgegangen, das mit einer Ventilpatrone in ein Ventilgehäuse eingesetzt ist. Die Ventilpatrone besteht aus einer an einem Abflußteil verstemmten Hülse und ist als vormontierte, mehrteilige Patrone in das Ventilgehäuse eingesetzt. Zwischen der Ventilpatrone und dem Ventilgehäuse befindet sich eine Siebeinfassung mit einer Druckzunge, die eine Ventilkugel gegen den Ventilsitz des Abschlußteils drückt. Die Ventilkugel ist somit nur in Verbindung mit der Siebeinfassung gehalten. Eine weitere Ventilkugel liegt auf der entgegengesetzten Stirnfläche des Abschlußteils an. Die vorgeschlagene Konstruktion hat den Nachteil, daß das als Ventilaufnahmekörper wirksame Abschlußteil ausschließlich als mit der Hülse verstemmte Einheit im Ventilgehäuse gehalten werden kann. Die Verstemmkante zwischen der Hülse und dem Abschlußteil muß infolge der Haltefunktion für die Federzunge zwangsläufig unterhalb des Abschlußteils angeordnet sein, so daß sich eine Befestigung des Ventilaufnahmekörpes im Ventilgehäuse notwendigerweise nur durch die Verwendung einer am Ventilaufnahmekörper vormontierten Hülse ergibt. Somit läßt die für zwei Ventilschließglieder ausgelegte Gestaltung der Ventilpatrone keine direkte Befestigung des Ventilaufnahmekörpers im Ventilgehäuse zu. Es ergibt sich nicht nur die Notwendigkeit einer Vielzahl von Einzelteilen zur Herstellung der Ventilfunktion, sondern auch ein relativ großes Bauvolumen.

Daher ist es die Aufgabe der Erfindung, eine möglichst kompakt bauende Ventilanordnung vorzusehen, die eine einfache, sichere Montage und Positionierung der Ventilschließglieder ermöglicht, sowie den fluidischen Mengendurchfluß günstig gestaltet.

Diese Aufgabe wird erfindungsgemäß durch die Merkmale des Patentanspruchs 1 und 8 gelöst, wodurch sich die Notwendigkeit zur Verwendung von Halteteilen zur Positionierung der Ventilschließglieder und des Ventilaufnahmekörpers erübrigt.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: eine Draufsicht auf den das erste Ventilschließglied aufweisenden Ventilaufnahmekörper,
- Figur 2: einen Querschnitt der Ventilanordnung an der Schnittstelle A-B nach Figur 1,
- Figur 3: eine alternative Ausführungsform zur Anordnung des ersten Ventilschließgliedes im Ventilaufnahmekörper des weiteren Ventilschließgliedes.

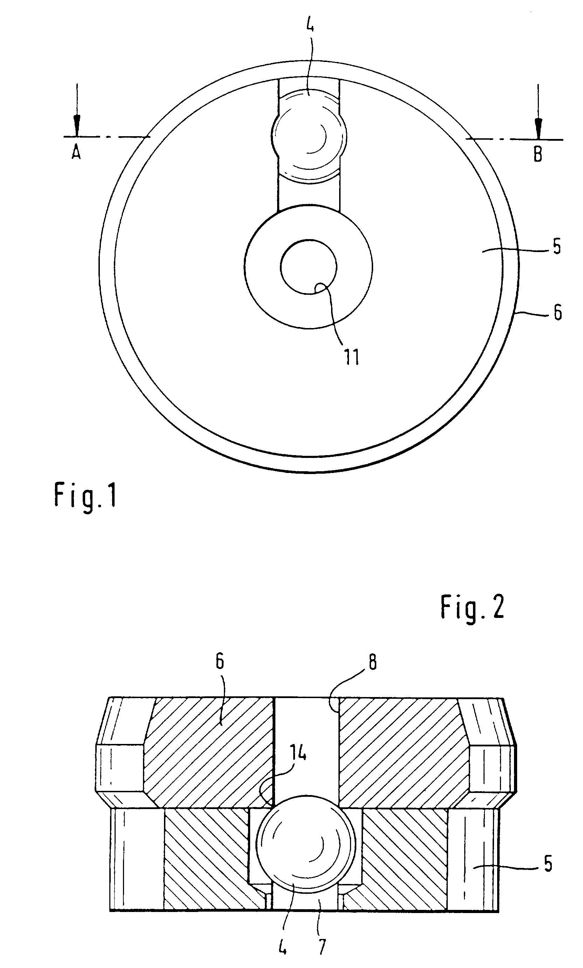

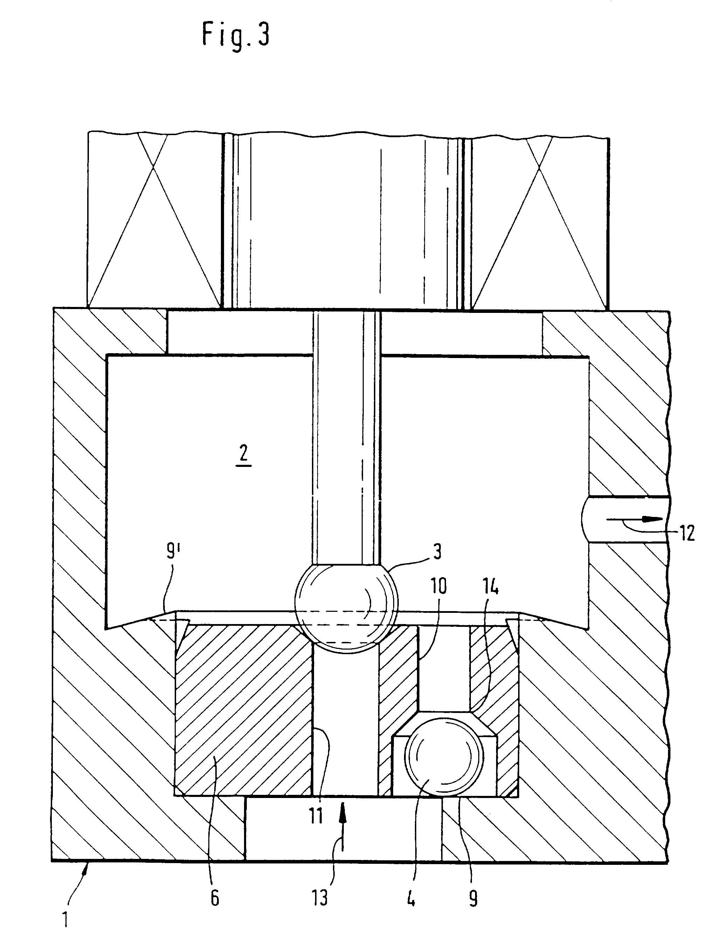

Es zeigt die Figur 1 das erste Ventilschließglied 4 außermittig im Ventilaufnahmekörper 5 angeordnet und den zentralen Druckmitteldurchlaß 11 für das weitere Ventilschließglied 3. Das als Rückschlagventil wirksame erste Ventilschließglied 4 ist als Kugelventil ausgeführt. Der Ventilaufnahmekörper 5 ist eine scheibenförmige Ventilplatte, die der Ventilaufnahmebohrung des Ventilgehäuses angepaßt ist (vergleiche Figur 3).

Die Figur 2 zeigt einen Querschnitt in der aus Figur 1 ersichtlichen Ebene des ersten Ventilschließgliedes 4. Der erste wie auch der weitere Ventilaufnahmekörper 5, 6 sind in Überdeckung derart angeordnet, daß die Druckmitteldurchlässe 7, 8 beider Ventilaufnahmekörper 5, 6 koaxial zueinander ausgerichtet sind. Der Ventilsitz 14 führt das als Kugelrückschlagventil ausgebildete Ventilschließglied 4. Dieser ergibt sich infolge der unterschiedlichen lichten Weite beider überlagerten Druckmitteldurchlässe 7, 8 an den Kontaktflächen. Es bedarf daher bezüglich der erweiterten, das Kugelventil aufnehmenden Bohrung lediglich einer Verstemmung an der dem Ventilsitz 14 abgewandten Bohrungsöffnung oder alternativ einer entsprechenden kegelförmig verjüngten Bohrung des Druckmitteldurchlasses 7, um das Ventilschließglied 4 vor dem Herausfallen zu schützen. In einer zur gezeigten Schnittebene versetzten Ebene, befindet sich das weitere Ventilschließglied 3, das in der rotationssymmetrisch im Ventilaufnahmekörper 6 gelegenen Bohrung (vergleiche Figur 1) zur Anlage gelangt.

Die Figur 3 zeigt eine alternative vorteilhafte Ausführung des Erfindungsgedankens, wonach beide Ventilschließglieder 3, 4 in einem einzigen Ventilaufnahmekörper 6 geführt sind. Das erste, als Kugelrückschlagventil ausgebildete Ventilschließglied 4 ist innerhalb einer zur Symmetrieachse des Ventilaufnahmekörpers 6 koplanaren Stufenbohrung 10 angeordnet. Der Übergang der Stufenbohrung 10 ist als Ventilsitz 14 kegelstumpfförmig gestaltet. Der erweiterte Kanalanschluß am Kegelstumpf bildet den das Kugelrückschlagventil aufnehmenden Druckmitteldurchlaß zur Druckmittelquelle 13, beispielsweise zum Bremsdruckgeber, während der verjüngte Kanalanschluß den Druckmitteldurchlaß zum Druckmittelverbraucher 12, beispielsweise zur Radbremse, herstellt. Die der Druckmittelquelle 13 in der Ventilaufnahmebohrung 2 zugewandte Bohrungsstufe 9, ist in ihrem hydraulischen Durchlaßquerschnitt derart bemessen, daß Druckmittel ungehindert von der Druckmittelquelle 13 in den das Kugelrückschlagventil aufnehmenden Druckmitteldurchlaß gelangen kann. Ein herausfallen des Kugelrückschlagventils ist infolge einer ausreichenden Überdeckung der Kugel durch die Bohrungsstufe 9 verhindert. Die Bohrungsstufe 9 übernimmt die Funktion eines Ventilanschlags. Eine weitere dem Druckmittelverbraucher 12 zugewandte Bohrungsstufe 9' im Ventilgehäuse 1 bildet einen vergrößerten Öffnungsquerschnitt, um das Einfügen des Ventilaufnahmekörpers 6 in die Ventilaufnahmebohrung 2 zu ermöglichen. Diese Bohrungsstufe 9' ist beispielhaft als Verstemmstelle an der Berandung des Ventilaufnahmekörpers 6 ausgelegt. Der Ventilaufnahmekörper 6 nimmt in einer zentral gelegenen Durchlaßbohrung 11 das weitere, vorzugsweise elektromagnetisch betätigbare Ventilschließglied 3 auf. Zur Zentrierung und Abdichtung der Durchgangsbohrung 11 ist diese in Richtung des Ventilschließgliedes 3 kegelförmig erweitert, so daß in der Schließstellung des Ventilschließgliedes 3 die Druckmittelverbindung zwischen der Druckmittelquelle 13 und dem Druckmittelverbraucher 12 nur über das Kugelrückschlagventil in Richtung der Druckmittelquelle 13 und damit zur Druckentlastung des Druckmittelverbrauchers 12 erfolgen kann.

## Patentansprüche

1. Ventilanordnung, insbesondere Elektromagnetventilanordnung für schlupfgeregelte Kraftfahrzeugbremsanlagen, mit einem hydraulisch vom durchfließenden Medium ansteuerbaren ersten Ventilschließglied (4), sowie mit einem weiteren Ventilschließglied (3), das mit dem ersten Ventilschließglied (4) in einer Ventilaufnahmebohrung (2) des die Ventilanordnung aufnehmenden Ventilgehäuses (1) angeordnet ist, wobei beide Ventilschließglieder (3,4) im Ventilgehäuse (1) wirkungsmäßig unabhängig voneinander schaltbar sind, wobei die Ventilaufnahmebohrung (2) des weiteren Ventilschließglieds (3) mit Bohrungsstufen (9,9') versehen ist, die einen Ventilaufnahmekörper (6) in der Ventilaufnahmebohrung (2) halten, wobei das Einfügen des Ventilaufnahmekörpers (6) in das Ventilgehäuse (1) mittels einer Bohrungsstufe (9') mit vergrößertem Öffnungsquerschnitt ermöglicht ist, und wobei der Ventilaufnahmekörper (6) mit Ventilsitzflächen und mit einer Stufenbohrung (10) versehen ist, in welcher das erste Ventilschließglied (4) und deren zugehörige Sitzfläche angeordnet sind, dadurch **gekennzeichnet**, daß eine Bohrungsstufe (9) im Ventilgehäuse (1) die das erste Ventilschließglied (4) aufnehmende Stufenbohrung (10) derart ausreichend überdeckt, daß ein Herausfallen des ersten Ventilschließgliedes (4) aus der Stufenbohrung (10) des Ventilaufnahmekörper (6) verhindert ist.

2. Ventilanordnung nach Anspruch 1, dadurch **gekennzeichnet**, daß ein dem weiteren Ventilschließglied (3) zugehöriger Druckmitteldurchlaß (11) auf der Rotationsachse des vorzugsweise als Ventilplatte ausgebildeten Ventilaufnahmekörpers (6) gelegen ist und daß die Stufenbohrung (10) des ersten Ventilschließgliedes (4) außermittig und näherungsweise koplanar zum Druckmitteldurchlaß (11) im Ventilaufnahmekörper (6) des weiteren Ventilschließgliedes (3) angeordnet ist.

3. Ventilanordnung nach Anspruch 1 oder 2, dadurch **gekennzeichnet**, daß das erste Ventilschließglied (4) im Ventilaufnahmekörper (6) (3) angeordnet ist.

4. Ventilanordnung nach Anspruch 1, dadurch **gekennzeichnet**, daß eine Bohrungsstufe (9') reibschlüssig, vorzugsweise als Verstemmung den Ventilaufnahmekörper (6) aufnimmt.

5. Ventilanordnung nach Anspruch 2, dadurch **gekennzeichnet**, daß die Übergänge der Stufenbohrung (10) und des Druckmitteldurchlasses (11) im Ventilaufnahmekörper (6) aus kegelförmigen Ventilsitzflächen gebildet sind, an denen die Ventilschließglieder (3,4) anlegbar sind.

6. Ventilanordnung nach einem der vorhergehenden Ansprüche 1 bis 3 und 5, dadurch **gekennzeichnet**, daß das erste Ventilschließglied (4) als hydraulisch betätigbares Kugelrückschlagventil ausgebildet ist, daß das weitere baulich und wirkungsmäßig parallel geschaltete Ventilschließglied (3) elektromagnetisch betätigbar ist.

7. Ventilanordnung nach Anspruch 6, dadurch **gekennzeichnet**, daß das erste Ventilschließglied (4) die hydraulische Verbindung zwischen einem Druckmittelverbraucher (12), insbesondere einer schlupfgeregelten Radbremse und einem vorzugsweise als Druckmittelquelle (13) wirksamen Bremsdruckgeber in Richtung des Druckmittelverbrauchers (12) sperrt.

8. Ventilanordnung, insbesondere Elektromagnetventilanordnung für schlupfgeregelte Kraftfahrzeugbremsanlagen, mit einem ersten hydraulisch vom durchfließenden Medium ansteuerbaren Ventilschließglied (4), sowie mit einem weiteren, vorzugsweise mittels Magnetanker und Magnetspule elektromagnetisch steuerbaren Ventilschließglied (3) das mit dem ersten Ventilschließglied (4) in einer Ventilaufnahmebohrung (2) des die Ventilanordnung aufnehmenden Ventilgehäuses (1) angeordnet ist, wobei beide Ventilschließglieder (3,4) im Ventilgehäuse (1) wirkungsmäßig unabhängig voneinander schaltbar sind, dadurch **gekennzeichnet**, daß in der Ventilaufnahmebohrung (2) ein erster sowie ein zweiter Ventilsitzflächen aufweisender Ventilaufnahmekörper (5,6) einander überdecken, die mit den Ventilschließglieden (3,4) derart zusammen wirken, daß mittels koaxialer Überdeckung von Druckmitteldurchlässen (7,8) mit unterschiedlicher Durchlaßweite in den Ventilaufnahmekörpern (5,6), eine das erste Ventilschließglied (4) aufnehmende, die zugehörige Sitzfläche aufweisende Stufenbohrung im ersten Ventilaufnahmekörper (5) gebildet ist, wobei das erste Ventilschließglied (4) außermittig im ersten Ventilaufnahmekörper (5) angeordnet ist und das weitere Ventilschließglied (3) in einer rotationssymetrisch im zweiten Ventilaufnahmekörper (6) gelegenen, die zugehörige Sitzfläche aufweisenden Bohrung (11) zur Anlage gelangt.

## Claims

1. A valve arrangement, particularly a solenoid valve arrangement for slip-controlled automotive vehicle brake systems, with a first valve closure member (4) which is actuatable hydraulically by the throughflowing medium, as well as with a second valve closure member (3) arranged with the first valve closure member (4) in a valve accommodating bore (2) of the valve housing (1) which accommodates the valve arrangement, with both valve closure members (3, 4) being operable in the valve housing (1) independently of each other in terms of action, wherein the valve accommodating bore (2) of the second valve closure member (3) has bore steps (9, 9') which hold a valve accommodating body (6) in the valve accommodating bore (2), wherein the insertion of the valve accommodating body (6) into the valve housing (1) is rendered possible by means of a bore step (9') having an enlarged opening cross-section, and wherein the valve accommodating body (6) includes valve seat surfaces and a stepped bore (10) in which the first valve closure member (4) and its associated seat surface is arranged,
characterized in that a bore step (9) in the valve housing (1) sufficiently overlaps the stepped bore (10) of the first valve closure member (4), which accommodates the first valve closure member (4), so as to prevent the first valve closure member (4) from falling out of the stepped bore (10) of the valve accommodating body (6).

2. A valve arrangement as claimed in claim 1,
characterized in that a pressure medium passage (11) appertaining to the second valve closure member (3) lies on the axis of rotation of the valve accommodating body (6) that is preferably designed as a valve plate, and in that the stepped bore (10) of the first valve closure member (4) is arranged in the valve accommodating body (6) of the second valve closure member (3) in an eccentric manner and, by approximation, coplanar to the pressure medium passage (11).

3. A valve arrangement as claimed in claim 1 or in claim 2,
characterized in that the first valve closure member (4) is arranged in the valve accommodating body (6).

4. A valve arrangement as claimed in claim 1,
characterized in that a bore step (9') accommodates the valve accommodating body (6) in a frictionally engaged manner, preferably by way of caulking.

5. A valve arrangement as claimed in claim 2,
characterized in that the transitions of the stepped bore (10) and the pressure medium passage (11) in the valve accommodating body (6) are formed by conical valve seat surfaces which can be abutted by the valve closure members (3, 4).

6. A valve arrangement as claimed in any one of the preceding claims 1 through 3 and 5,
characterized in that the first valve closure member (4) is designed as a hydraulically operable ball-type non-return valve, and in that the second valve closure member (3) which in terms of construction and of action is connected parallel is electromagnetically operable.

7. A valve arrangement as claimed in claim 6,
characterized in that the first valve closure member (4) closes the hydraulic communication between a pressure medium consumer (12), in particular a slip-controlled wheel brake, and a braking pressure generator, preferably acting as pressure medium source (13), in the direction of the pressure medium consumer (12).

8. A valve arrangement, particularly a solenoid valve arrangement for slip-controlled automotive vehicle brake systems, with a first valve closure member (4) which is actuatable hydraulically by the throughflowing medium as well as with a second valve closure member (3), that is preferably electromagnetically controllable by means of an armature and a magnet coil and arranged with the first valve closure member (4) in a valve accommodating bore (2) of the valve housing (1) which accommodates the valve arrangement, with both valve closure members (3, 4) being operable in the valve housing (1) independently of each other in terms of action,
characterized in that, in the valve accommodating bore (2), a first and a second valve accommodating body (5, 6) having valve seat surfaces cover each other and interact with the valve closure members (3, 4) in such a fashion that, by means of coaxial overlapping of pressure medium passages (7, 8) with different passage widths in the valve accommodating bodies (5, 6), a stepped bore is formed in the first valve accommodating body (5), which stepped bore accommodates the first valve closure member (4) and has the associated seat surface, wherein the first valve closure member (4) is arranged eccentrically in the first valve accommodating body (5) and the second valve closure member (3) comes to abut a bore (11) which is situated in the second valve accommodating body (6) having the associated seat surface in a rotationally symmetrical manner.

## Revendications

1. Agencement de valve, notamment agencement de valve à commande électromagnétique pour système de freinage de véhicule automobile à régulation du glissement, comprenant un premier obturateur de valve (4) pouvant être commandé hydrauliquement par le fluide traversant, ainsi qu'un second obturateur de valve (3) qui est disposé avec le premier obturateur de valve (4) dans un alésage de logement de valve (2) du boîtier de valve (1) recevant l'agencement de valve, les deux obturateurs de valve (3, 4) pouvant changer de position dans le boîtier de valve (1) d'une manière indépendante l'un de l'autre en ce qui concerne leur action, tandis que l'alésage de logement de valve (2) du second obturateur de valve (3) est pourvu d'épaulements d'alésage (9, 9') qui maintiennent un corps de logement de valve (6) dans l'alésage de logement de valve (2) et que l'introduction du corps de logement de valve (6) dans le boîtier de valve (1) est rendue possible au moyen d'un épaulement d'alésage (9') à section d'ouverture plus grande, le corps de logement de valve (6) étant pourvu de surfaces de siège de valve et d'un alésage étagé (10) dans lequel sont disposés le premier obturateur de valve (4) et la surface de siège qui lui est associée, caractérisé en ce qu'un épaulement d'alésage (9) ménagé dans le boîtier de valve (1) recouvre l'alésage étagé (10) recevant le premier obturateur de valve (4), d'une façon suffisante pour que le premier opérateur de valve (4) soit empêché de tomber de l'alésage étagé (10) du corps de logement de valve (6).

2. Agencement de valve selon la revendication 1, caractérisé en ce qu'un passage d'agent de pression (11), associé au second obturateur de valve (3), est disposé suivant l'axe de révolution du corps de logement de valve (6), de préférence réalisé sous forme d'une plaque de valve, et en ce que l'alésage étagé (10) du premier obturateur de valve (4) est disposé à l'écart du centre et d'une manière approximativement coplanaire vis-à-vis du passage d'agent de pression (11) dans le corps de logement de valve (6) du second obturateur de valve (3).

3. Agencement de valve selon la revendication 1 ou 2, caractérisé en ce que le premier obturateur de valve (4) est disposé dans le corps de logement de valve (6).

4. Agencement de valve selon la revendication 1, caractérisé en ce qu'un épaulement d'alésage (9') reçoit en immobilisation par frottement, de préférence sous forme d'un matage, le corps de logement de valve (6).

5. Agencement de valve selon la revendication 2, caractérisé en ce que les transitions de l'alésage étagé (10) et du passage d'agent de pression (11) dans le corps de logement de valve (6) sont formées de surfaces de siège de valve coniques sur lesquelles les obturateurs de valve (3, 4) peuvent prendre appui.

6. Agencement de valve selon l'une des revendications précédentes 1 à 3 et 5, caractérisé en ce que le premier obturateur de valve (4) est réalisé sous forme d'une valve antiretour à bille pouvant être commandée par voie hydraulique et en ce que le second obturateur de valve (3), monté en parallèle sur le plan structurel et en ce qui concerne l'action, peut être commandé par voie électromagnétique.

7. Agencement de valve selon la revendication 6, caractérisé en ce que le premier obturateur de valve (4) permet un blocage, en direction d'un utilisateur d'agent de pression (12), notamment un frein de roue à régulation du glissement, de la communication hydraulique entre cet utilisateur d'agent de pression (12) et un générateur de pression de freinage, agissant de préférence en temps que source d'agent de pression (13).

8. Agencement de valve, notamment agencement de valve à commande électromagnétique pour système de freinage de véhicule automobile à régulation du glissement, comprenant un premier obturateur de valve (4) pouvant être commandé hydrauliquement par le fluide traversant, ainsi qu'un second obturateur de valve (3) pouvant être commandé de préférence de façon électromagnétique au moyen d'une bobine et d'un noyau magnétiques et qui est disposé avec le premier obturateur de valve (4) dans un alésage de logement de valve (2) du boîtier de valve (1) recevant l'agencement de valve, les deux obturateurs de valve (3, 4) pouvant changer de position dans le boîtier de valve (1) d'une manière indépendante l'un de l'autre en ce qui concerne leur action, caractérisé en ce que, dans l'alésage de logement de valve (2), un premier et un second corps de logement de valve (5, 6) comportant des surfaces de siège de valve se recouvrent l'un l'autre, ce premier et ce second corps de logement de valve (5, 6) coopérant avec les obturateurs de valve (3, 4) de façon telle que, grâce à un recouvrement coaxial de passages d'agent de pression (7,8) à largeur d'ouverture de passage différente dans les corps de logement de valve (5, 6), un alésage étagé, qui reçoit le premier obturateur de valve (4) et comporte la surface de siège associée, est formé dans le premier corps de logement de valve (5), tandis que le premier obturateur de valve (4) est disposé à l'écart du centre dans le premier corps de logement de valve et que le second obturateur de valve (3) vient en appui dans un alésage (11) à symétrie de révolution qui est ménagé dans le second corps de logement de valve (6) et comporte la surface de siège associée.
